(19) Europäisches Patentamt
European Patent Office
Office européen des brevets

(11) **EP 4 772 416 A2**

(12) **EUROPEAN PATENT APPLICATION**

(43) Date of publication:
**08.07.2026 Bulletin 2026/28**

(21) Application number: **26180250.8**

(22) Date of filing: **29.11.2022**

(51) International Patent Classification (IPC):
***B60W 60/00*** *(2020.01)*

(52) Cooperative Patent Classification (CPC):
**B60W 60/0011; B60W 30/02;** B60W 2050/0096;
B60W 2520/10; B60W 2520/105; B60W 2710/06;
B60W 2710/182; B60W 2710/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.12.2021 JP 2021198318**

(62) Document number(s) of the earlier application(s) in
accordance with Art. 76 EPC:
**22904094.4 / 4 446 186**

(71) Applicant: **Astemo, Ltd.**
**Chiyoda-ku,**
**Tokyo 1000004 (JP)**

(72) Inventors:
• **IBA, Tatsuya**
**Hitachinaka-shi, Ibaraki, 312-8503 (JP)**
• **UENO, Kentaro**
**Hitachinaka-shi, Ibaraki, 312-8503 (JP)**

(74) Representative: **Hoefer & Partner Patentanwälte
mbB**
**Pilgersheimer Straße 20**
**81543 München (DE)**

Remarks:
This application was filed on 21-05-2026 as a
divisional application to the application mentioned
under INID code 62.

(54) **VEHICLE CONTROL DEVICE, VEHICLE CONTROL METHOD, AND VEHICLE CONTROL SYSTEM**

(57) According to one aspect of an embodiment of the present invention a vehicle control system (200) is proposed, comprising: an environment recognition unit (300) that is configured to acquire information related to a driving environment of a driving road on which a vehicle (100) travels; a vehicle motion state acquisition unit (400) that is configured to acquire information related to a motion state of the vehicle (100); a control unit (500, 600, 630, 800, 830, 850) that is configured to output a calculation result based on input information, wherein: the control unit (500, 600, 630, 800, 830, 850) is configured to calculate, while holding, for a predetermined distance from the vehicle (100), a shape of a first target trajectory calculated at a first time (t0) for calculating a target trajectory along which the vehicle (100) is to travel, a second target trajectory at a second time (t0+ΔT) which is a next calculation timing of a target trajectory, to set a total distance of a distance to be traveled by the vehicle (100) during a time (ΔT) from the first time (t0) to the second time (t0+ΔT) and a preview point distance (D) that indicates a distance to be traveled by the vehicle (100) during a preview time (Tfwd) as the predetermined distance, and to output a control command for driving the vehicle (100) based on information related to a second target position set on the second target trajectory; and an actuator unit (700) is provided that is configured to control the motion state of the vehicle (100) based on the control command.

FIG. 9

```
                    START
S1001
        OBTAIN VEHICLE LOCATION AND VELOCITY
S1002
        CALCULATE LENGTH OF TRAJECTORY
              TO BE RETAINED
S1003
        RETAIN TRAJECTORY CORRESPONDING TO
              PREDETERMINED DISTANCE
S1004
        CALCULATE TRAJECTORY
        BEYOND PREDETERMINED DISTANCE
S1005
        TERMINATE TRAJECTORY CALCULATION
S1006
        OBTAIN VEHICLE LOCATION
S1007
        CONTROL TRAJECTORY TRACKING
        BASED ON PREVIEW POINT
                     END
```

**Description**

TECHNICAL FIELD

The present invention relates to a vehicle control device, a vehicle control method, and a vehicle control system.

BACKGROUND ART

Patent Document 1 discloses a travel control method for a vehicle in which a target trajectory along which a subject vehicle is to travel is detected, and the subject vehicle is controlled to autonomously travel along the detected target trajectory. This method includes provisionally setting a preview point distance from the subject vehicle to a preview point at least in accordance with traveling lane information, estimating a traveling trajectory of the subject vehicle in which the subject vehicle coincides with the target trajectory at the preview point if the subject vehicle travels the provisionally-set preview point distance, detecting a maximum value of a lateral displacement between the estimated traveling trajectory of the subject vehicle and the target trajectory during travel from a current position of the subject vehicle to the preview point, and definitely setting the preview point distance when the maximum value of the lateral displacement is a predetermined value or less as an actual preview point distance and then controlling the subject vehicle to autonomously travel on the basis of the definitely-set preview point distance.

REFERENCE DOCUMENT LIST

PATENT DOCUMENT

Patent Document 1: JP 6610799 B

SUMMARY OF THE INVENTION

PROBLEM TO BE SOLVED BY THE INVENTION

An example of trajectory tracking control for causing a vehicle to travel along a target trajectory may, for example, generate a vehicle control command using a preview point set on the target trajectory ahead of the subject vehicle as a target tracking point.
In such a trajectory tracking control, when there is a large change in the shape of the target trajectory between the previous calculation cycle and the current calculation cycle, the target tracking point is abruptly displaced, and thus, a vehicle caused to track the target tracking point may behave in an unexpected manner.
Here, when the target tracking point is set at a distance at which a deviation amount of the traveling trajectory of the vehicle with respect to the target trajectory is less than or equal to a predetermined value so as to prevent the abrupt displacement of the target tracking point, the target tracking point is consequently set at a position closer to the subject vehicle. The control performance for tracking the target trajectory may thus deteriorate due to, for example, a response delay of the vehicle control.
The present invention has been made in view these conventional circumstances, and an object of the present invention is to provide a vehicle control device, a vehicle control method, and a vehicle control system that can prevent occurrence of an unexpected vehicle behavior while ensuring the control performance for tracking the target trajectory.

MEANS FOR SOLVING THE PROBLEM

The object underlying the present invention is achieved by a vehicle control system according to claim 1. A preferred embodiment is defined in dependent claim 1.
According to one embodiment of an aspect of the present invention, while retaining a part of a first target trajectory calculated at a first time for calculating a target trajectory along which a vehicle is to travel, a second target trajectory is calculated at a second time which is a next calculation timing of target trajectory after a calculation cycle from the first time. The retained part of the first target trajectory includes a section corresponding to a distance to be traveled by the vehicle during a time from the first time to the second time, and a first target position set on the first target trajectory.

EFFECTS OF THE INVENTION

The present invention makes it possible to prevent occurrence of an unexpected vehicle behavior while ensuring the control performance for tracking the target trajectory.

BRIEF DESCRIPTION OF THE DRAWINGS

FIG. 1 is a block diagram illustrating a vehicle control system.
FIG. 2 is a diagram outlining a lane keeping function.
FIG. 3 is a diagram outlining a preceding vehicle tracking function.
FIG. 4 is a diagram outlining a path tracking function.
FIG. 5 is a diagram showing how to determine lateral deviation.
FIG. 6 is a diagram illustrating operation and function of a trajectory retaining processing.
FIG. 7 is a diagram illustrating a length requirement of a target trajectory.
FIG. 8 is a diagram illustrating a coordinate transformation processing in a trajectory retaining processing.
FIG. 9 is a flowchart illustrating a control process which is performed when a trajectory retaining processing is implemented.
FIG. 10 is a flowchart illustrating a control process which is performed when a trajectory retaining processing is implemented at the time of switching of application software.
FIG. 11 is a flowchart illustrating a control process which is performed when a trajectory retaining processing is canceled at the time of emergency avoidance.
FIG. 12 is a functional block diagram illustrating a trajectory tracking function based on a trajectory point sequence.
FIG. 13 is a diagram illustrating a vehicle control system including an integrated control unit provided with two microcomputers.
FIG. 14 is a diagram illustrating a vehicle control system including an integrated control unit provided with one microcomputer.
FIG. 15 is a diagram illustrating a pattern of dividing functional units between two microcomputers.

MODE FOR CARRYING OUT THE INVENTION

A vehicle control device, a vehicle control method, and a vehicle control system according to embodiments of the present invention are described below with reference to the drawings.

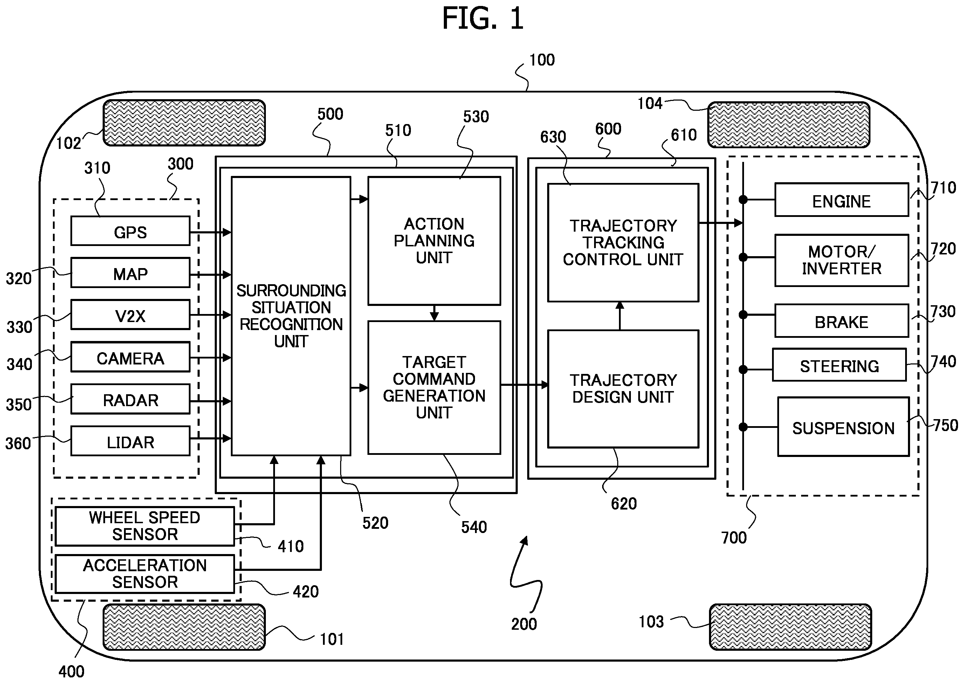

FIG. 1 is a block diagram illustrating an aspect of a vehicle control system 200 provided in a vehicle 100.

Vehicle 100 is an automobile having a pair of right and left front wheels 101 and 102 and a pair of right and left rear wheels 103 and 104.

Vehicle control system 200 is a driver assistance system or an autonomous driving system for planning a target trajectory of vehicle 100 and controlling the steering angle, driving force, and braking force, etc., of vehicle 100 so that vehicle 100 travels along the target trajectory.

Vehicle control system 200 includes an external environment recognition unit 300, a vehicle motion state acquisition unit 400, an automated driving control unit 500, a vehicle motion control unit 600, and an actuator unit 700.

External environment recognition unit 300 acquires information related to the driving environment of a driving road on which vehicle 100 travels.

External environment recognition unit 300 includes, for example, a global positioning system (GPS) receiving unit 310, a map database 320, a road-to-vehicle communication device 330, a camera 340, a radar 350, and a light detection and ranging, laser imaging detection and ranging (LiDAR) 360.

GPS receiving unit 310 receives signals from GPS satellites and thereby measures the latitude and the longitude of the location of vehicle 100.

Map database 320 is formed in a storage device provided in vehicle 100.

Map information in map database 320 includes information such as road locations, road shapes, and intersection locations.

Road-to-vehicle communication device 330 transmits information about vehicle 100 to a roadside device and receives road traffic information, such as curves and intersections, from the roadside device.

External environment recognition unit 300 may include a vehicle-to-vehicle communication device that acquires, for example, road traffic information and behavior information of other vehicles from the other vehicles.

Camera 340 is, for example, a stereo camera, a monocular camera, or a 360-degree camera and captures surroundings of vehicle 100 to obtain image information of the surroundings of vehicle 100.

Radar 350 and LiDAR 360 detect objects around vehicle 100 and output information on the detected objects.

Vehicle motion state acquisition unit 400 acquires information related to the motion state of vehicle 100.

Vehicle motion state acquisition unit 400 includes, for example, a wheel speed sensor 410 and an acceleration sensor 420.

Wheel speed sensor 410 is a sensor that detects the rotation velocity of each wheel of vehicle 100, and the detection result obtained by wheel speed sensor 410 is used to estimate the velocity of vehicle 100.

Vehicle motion state acquisition unit 400 may include a vehicle velocity sensor that detects the velocity of vehicle 100, in place of, or in addition to, wheel speed sensor 410.

In addition, acceleration sensor 420 detects, for example, the longitudinal acceleration, the lateral acceleration, the vertical acceleration, the yaw rate, the pitch rate, and the roll rate of vehicle 100.

Automated driving control unit 500 is an electronic control device including a microcomputer 510 as a main component that performs calculation based on the acquired information and outputs calculation results.

Microcomputer 510 includes, for example, a microprocessor unit (MPU), a read-only memory (ROM), and a random access memory (RAM) (not shown).

Microcomputer 510 acquires external information recognition signals such as location information about vehicle 100, road shape information, road surface information, and object information from external environment recognition unit 300.

Microcomputer 510 also acquires vehicle motion detection signals such as the velocity and the acceleration of vehicle 100 from vehicle motion state acquisition unit 400.

Microcomputer 510 calculates a target command in a trajectory tracking control based on the acquired information and outputs the calculated target command to vehicle motion control unit 600.

Microcomputer 510 of automated driving control unit 500 includes a surrounding situation recognition unit 520, an action planning unit 530, and a target command generation unit 530 as functional units for calculating the target command.

Surrounding situation recognition unit 520 recognizes the situation around vehicle 100 based on the external information recognition signals from external environment recognition unit 300 and the vehicle motion detection signals from vehicle motion state acquisition unit 400.

The situation around vehicle 100 recognized by surrounding situation recognition unit 520 includes, for example, information about a road curvature, cant of a road surface, a road surface gradient, a road surface friction coefficient $\mu$, locations of right and left lane markers, locations of right and left road edges, moving objects, stationary objects, etc.

The moving objects are, for example, pedestrians, bicycles, motorcycles, and other vehicles. The stationary objects are, for example, objects that have fallen on the road, traffic lights, guardrails, curbs, road signs, trees, and signboards.

Action planning unit 530 acquires information related to the situation around vehicle 100 recognized by surrounding situation recognition unit 520 and prepares an action plan for vehicle 100. The action plan includes, for example, a selected driving lane and a selected traveling direction at an intersection or a branch point.

In addition, target command generation unit 540 determines a target command to be output to vehicle motion control unit 600, based on the information related to the situation around vehicle 100 recognized by surrounding situation recognition unit 520 and the action plan prepared by action planning unit 530.

The target command that target command generation unit 540 specifies to vehicle motion control unit 600 includes, for example, a command specifying a driving area in front of vehicle 100, road surface information, and object information. The road surface information is information about road surface friction coefficient, a slope, and unevenness of the road surface, etc. The object information is information about another vehicle, a pedestrian, and an obstacle, etc.

Target command generation unit 540 specifies an area between lane markers, or an area between road edges as a driving area as the target command. In addition, if there is some object within the driving lane, target command generation unit 540 specifies an area that does not include this object as the driving area.

In addition, target command generation unit 540 can set, for example, an area behind an object as a collision risk area on the alert for sudden appearance of an object from behind the object and can specify an area that does not include this collision risk area as the driving area.

In addition, if there is an area that could not be recognized in front of vehicle 100, target command generation unit 540 can specify an area that does not include this unrecognized area as the driving area.

Vehicle motion control unit 600 is an electronic control device including a microcomputer 610 as a main component that performs calculation based on the acquired information (in other words, input information) and that outputs calculation results.

Microcomputer 610 includes an MPU, a ROM, a RAM, etc., not illustrated.

Microcomputer 610 calculates a control command based on the target command acquired from microcomputer 510 in automated driving control unit 500, and outputs the calculated control command to actuator unit 700 to control the motion of vehicle 100.

Microcomputer 610 includes a trajectory design unit 620 and a trajectory tracking control unit 630 as functional units for controlling the motion of vehicle 100.

Trajectory design unit 620 acquires, from automated driving control unit 500, specifically, from target command generation unit 540 in microcomputer 510, a target command including the driving area, road surface information, and object information, etc.

In accordance with the acquired target command, trajectory design unit 620 designs a target trajectory of vehicle 100 in a driver assistance function regarding automated driving. Trajectory design unit 620 then outputs information related to a target position on the target trajectory to trajectory tracking control unit 630.

Here, trajectory design unit 620 outputs, as the target position on the target trajectory, information related to a trajectory point that is a target destination at which vehicle 100 is to arrive at a later time.

Hereinafter, a trajectory point, which is a target destination at which vehicle 100 is to arrive after a preview time, will be referred to as a preview point. In addition, defined by the formula: preview time = preview point distance/vehicle velocity, the preview time can be varied according to the velocity of vehicle 100.

Information related to the preview point is location information of the preview point or relative location information of the preview point and vehicle 100.

Trajectory design unit 620 sets the preview point according to multiple driver assistance functions.

The driver assistance functions include functions such as a lane keeping function, a preceding vehicle tracking function, and an automated driving function.

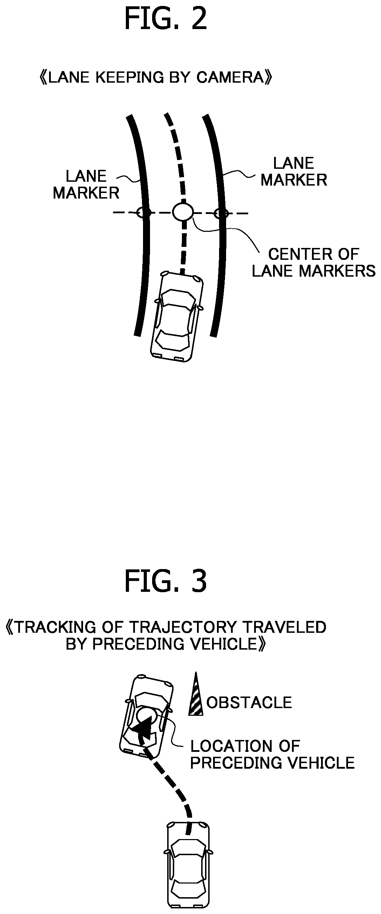

FIGs. 2 to 4 summarize setting of preview points in the lane keeping function, the preceding vehicle tracking function, and the automated driving function.

In the lane keeping function, trajectory design unit 620 sets a preview point at the center of the driving lane.

In the preceding vehicle tracking function, trajectory design unit 620 sets a preview point at the location of the preceding vehicle.

In a path tracking function, trajectory design unit 620 sets a preview point, for example, on a path directed to the destination.

When setting a target trajectory (a preview point), trajectory design unit 620 may generate a target trajectory that reduces lateral acceleration or lateral jerk of vehicle 100 as much as possible within the driving area specified by automated driving control unit 500.

That is, by designing a target trajectory that reduces lateral acceleration or lateral jerk of vehicle 100 as much as possible, trajectory design unit 620 can provide a target trajectory focusing on ride quality of vehicle 100.

On the other hand, trajectory tracking control unit 630 calculates a target command to cause vehicle 100 to track the target trajectory, based on a deviation amount of vehicle 100 relative to the target trajectory.

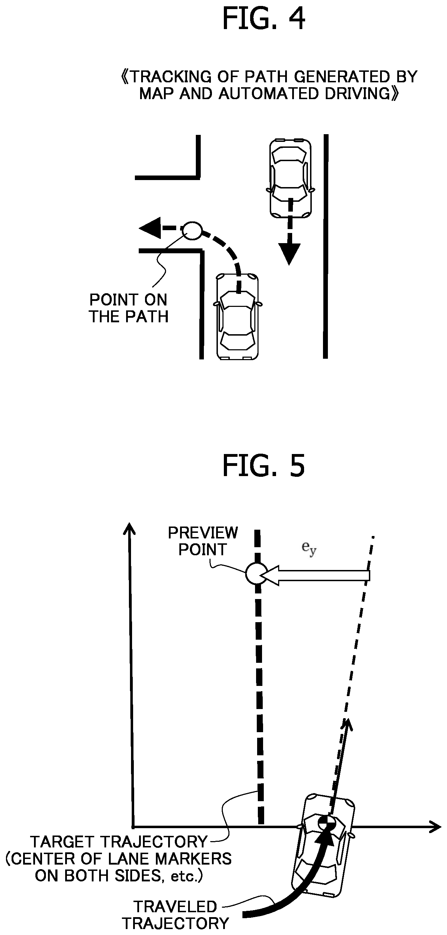

FIG. 5 shows how to determine a lateral deviation ey at a preview point.

Trajectory tracking control unit 630 determines an amount of lateral deviation of vehicle 100 relative to the target trajectory, which is predicted to be generated after the preview time when vehicle 100 keeps traveling in the current direction, as the lateral deviation ey.

Trajectory tracking control unit 630 sets a lateral acceleration command based on the lateral deviation ey, for example, and outputs the control command for implementing the lateral acceleration command to actuator unit 700.

Actuator unit 700 controls the motion of vehicle 100 in accordance with the control command received from vehicle motion control unit 600 (microcomputer 610).

Actuator unit 700 includes, for example, an internal-combustion engine 710 and a motor 720 that generate driving force for vehicle 100, a brake device 730 that applies braking force to vehicle 100, an electronically controlled power steering device 740 for changing the traveling direction of vehicle 100, and an electronically controlled suspension (active suspension) 750 that is capable of adjusting the damping force and vehicle height.

Motor 720 may be operated as a generator to apply braking force (in other words, regenerative braking force) to vehicle 100.

Trajectory design unit 620 has a function to design a target trajectory such that an abrupt displacement of a preview point as a target position between target trajectory calculation cycles can be prevented.

Specifically, in a calculation of target trajectory in each calculation cycle [ms], trajectory design unit 620 has a function to calculate, while a first target trajectory calculated at a first time being partly retained for a predetermined distance from vehicle 100, a second target trajectory at a second time, which is the next calculation timing after the calculation cycle from the first time, and to output information related to the second target position (second preview point) set on the second target trajectory to trajectory tracking control unit 630.

In other words, microcomputer 610 is configured to implement a vehicle control method including the above described trajectory designing process.

Here, trajectory design unit 620 sets the predetermined distance, for which the shape of trajectory is to be retained, as a distance required for restricting the displacement of the preview point in the target trajectory calculation cycle within an allowable range.

Specifically, while retaining a trajectory including a part of the first target trajectory calculated at the first time, trajectory design unit 620 calculates the second target trajectory at the second time which is the next target trajectory calculation timing. The retained part of the first target trajectory includes a section corresponding to a distance traveled by vehicle 100 during a time period from the first time to the second time and a first target position (first preview point) set on the first target trajectory.

In other words, trajectory design unit 620 variably sets the predetermined distance for which the shape of trajectory is retained, based on information on the targe trajectory calculation cycle, the preview time, and the velocity of vehicle 100, etc.

Trajectory tracking control unit 630 then outputs a control command to cause vehicle 100 to travel to actuator unit 700 based on information related to the second target position (the second preview point) set on the second target trajectory.

Such designing of target trajectory can prevent an abrupt change in the preview point, which is the target position in a tracking control, thereby preventing an unexpected vehicle behavior caused by controlling vehicle 100 toward the preview point.

In addition, in the above target trajectory designing, trajectory design unit 620 does not shorten the preview point distance so as to prevent the abrupt change in the preview point. Accordingly, deterioration of the control performance for tracking the target trajectory, which may be caused, for example, by a response delay of the vehicle control, can be prevented.

Designing a target trajectory with the shape of trajectory being partly retained will be described in detail below.

Trajectory design unit 620 is required to continuously vary the shape of the target trajectory depending on the surrounding environment that changes as vehicle 100 travels.

Here, when trajectory design unit 620 calculates a target trajectory for each constant calculation cycle $\Delta T$, the target trajectory, for which calculation is started at time t0 (the first time), is used in practice in the tracking control after time t0+$\Delta T$ (the second time) at which the target trajectory is updated.

Furthermore, in a control to cause vehicle 100 to track a target trajectory, trajectory tracking control unit 630 controls actuator unit 700 by using the preview point in front of vehicle 100 as the target position, as described above.

Accordingly, a change in the shape of a trajectory corresponding to a distance obtained by adding the distance to be traveled by vehicle 100 during the calculation cycle $\Delta T$ and the preview point distance, which is the distance from vehicle 100 to the preview point, may result in an abrupt displacement of the preview point between the current calculation timing and the previous calculation timing, thereby causing an abrupt change in the lateral deviation ey (see FIG. 5).

Trajectory design unit 620 thus sets the distance obtained by adding the distance to be traveled by vehicle 100 during the target trajectory calculation cycle $\Delta T$ and the preview point distance as the predetermined distance for which the shape of trajectory is to be retained, so that the shape of trajectory corresponding to this predetermined distance remains the same after re-calculation of the trajectory.

As a result, abrupt change in the lateral deviation ey during the target trajectory calculation cycle $\Delta T$ due to abrupt displacement of the preview point can be prevented, thereby preventing occurrence of an unexpected vehicle behavior.

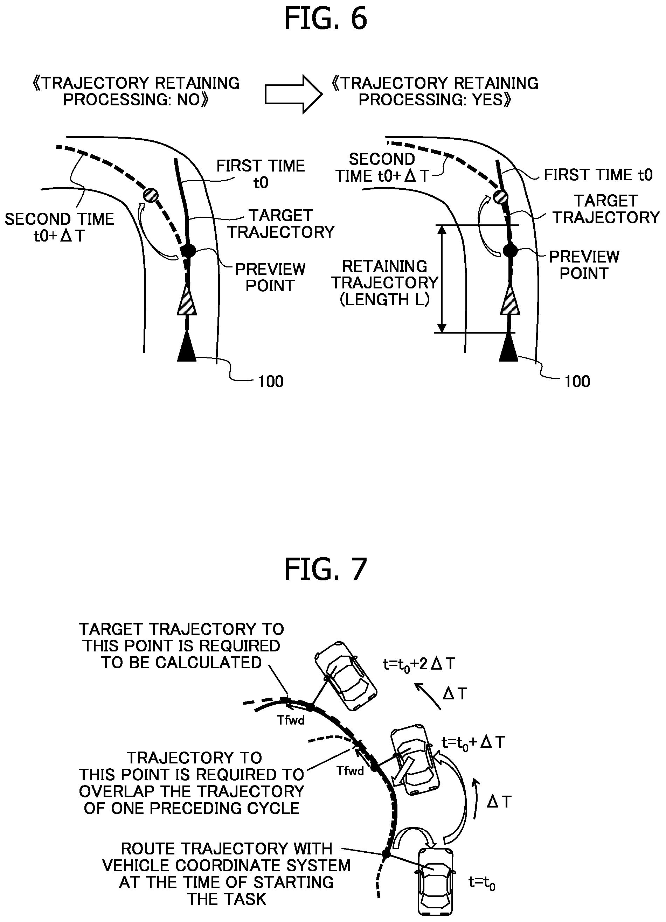

FIG. 6 exemplifies how the target trajectory and the preview point change when vehicle 100 enters a curve.

The left drawing of FIG. 6 illustrates how the preview point changes when the entire target trajectory is rerouted at the second time t0+$\Delta T$ after the calculation cycle $\Delta T$, without retaining a part of the target trajectory calculated at the first time t0.

Here, the shape of the target trajectory calculated before a curve at the first time t0 is substantially straight, whereas the shape of the target trajectory newly routed at the second time t0+$\Delta T$ after the calculation cycle $\Delta T$ follows the shape of the curve in preparation for entering the curve.

Accordingly, the preview point (the second target position) set at the second time t0+$\Delta T$ abruptly changes in a lateral direction relative to the preview point (the first target position) set at the first time t0.

On the other hand, the right drawing of FIG. 6 illustrates the preview points when the second target trajectory is calculated at the second time t0+$\Delta T$ which is the next calculation timing after the first time t0, while the first target trajectory being partly retained by the length corresponding to the distance obtained by adding the distance to be traveled by vehicle 100 during the calculation cycle $\Delta T$ and the preview point distance.

In such a case, the target trajectory corresponding to the distance obtained by adding the distance to be traveled by vehicle 100 during the calculation cycle $\Delta T$ and the preview point distance retains the shape of the target trajectory of the one preceding calculation cycle, whereas the subsequent target trajectory ahead thereof is changed.

Accordingly, the lateral displacement of the second preview point (the second target position) at the second time t0+$\Delta T$ relative to the first preview point (the first target position) at the first time t0 can be prevented.

That is, an abrupt displacement of the preview point, which is the target position on the target trajectory, is prevented, thereby preventing occurrence of an unexpected vehicle behavior due to trajectory tracking control.

In addition, in the above described target trajectory designing, the preview point distance is kept constant. Thus, degradation in the target trajectory tracking performance caused by the shortened distance of the preview point can be prevented.

FIG. 7 is a diagram illustrating a requirement for the length of the target trajectory in designing a target trajectory that partly retains the previously calculated trajectory by the length corresponding to the predetermined distance from vehicle 100.

In FIG. 7, Tfwd indicates the preview time.

Once calculation of target trajectory starts at the time t0, a target trajectory shown in a solid line in FIG. 7 is calculated based on information, such as the command specifying the driving area, acquired at time t0.

Here, the target trajectory shown in the solid line in FIG. 7 is represented by the vehicle coordinate system at time t0.

The trajectory, for which the calculation was started at time t0, is used for the trajectory tracking control at time t0+$\Delta$T at which the calculation cycle $\Delta$T from the time t0 has elapsed.

In addition, vehicle 100 travels a certain distance in accordance with the velocity of vehicle 100 during the calculation cycle $\Delta$T.

Here, in the processing of retaining the trajectory, trajectory design unit 620 uses the target trajectory calculated at time t0 in the one preceding calculation cycle without modification, from time t0+$\Delta$T until time t0+$\Delta$T+Tfwd.

Thus, until time t0+$\Delta$T+Tfwd, when seen in an absolute coordinate system, the target trajectory calculated at time t0+$\Delta$T must overlap with the target trajectory of the one preceding calculation cycle, in other words, must retain the shape of the target trajectory of the one preceding calculation cycle.

That is, when the shape of the target trajectory is to be retained by the distance obtained by adding the distance to be traveled by vehicle 100 during the calculation cycle $\Delta$T and the preview point distance, trajectory design unit 620 is needed to calculate, at time t0, the target trajectory beyond the trajectory at time t0+$\Delta$T+Tfwd.

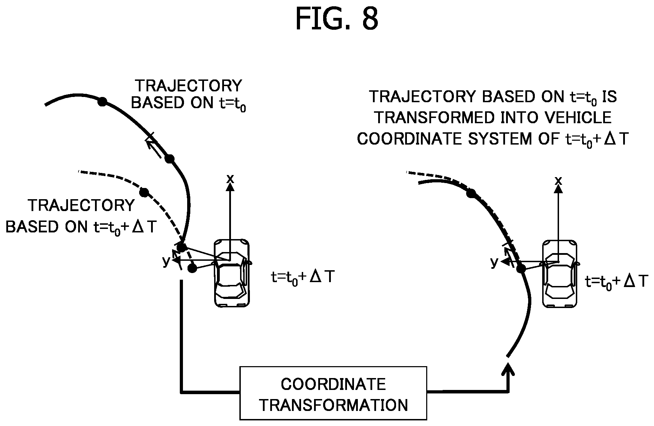

FIG. 8 illustrates a coordinate transformation processing in designing a target trajectory that partly retains the shape of the previously calculated trajectory.

In FIG. 8, a target trajectory calculated based on the information acquired at time t0 is shown by a solid line, and a target trajectory calculated based on the information acquired at time t0+$\Delta$T is shown by a phantom line.

The target trajectory calculated based on the information acquired at time t0+$\Delta$T needs to overlap with the target trajectory calculated based on the information acquired at time t0, for the length corresponding to the distance $\Delta$T+Tfwd from vehicle 100.

Here, the trajectory calculated at time t0 is based on the vehicle coordinate system at time t0. Accordingly, a part of the target trajectory calculated at time t0, of which the distance corresponds to $\Delta$T+Tfwd from vehicle 100, is required to be transformed into the vehicle coordinate system at time t0+$\Delta$T.

Thus, at time t0+$\Delta$T, trajectory design unit 620 converts the target trajectory calculated at time t0 by the distance corresponding to $\Delta$T+Tfwd from vehicle 100, into the vehicle coordinate system at time t0+$\Delta$T in accordance with the vehicle movement amount during the calculation cycle $\Delta$T.

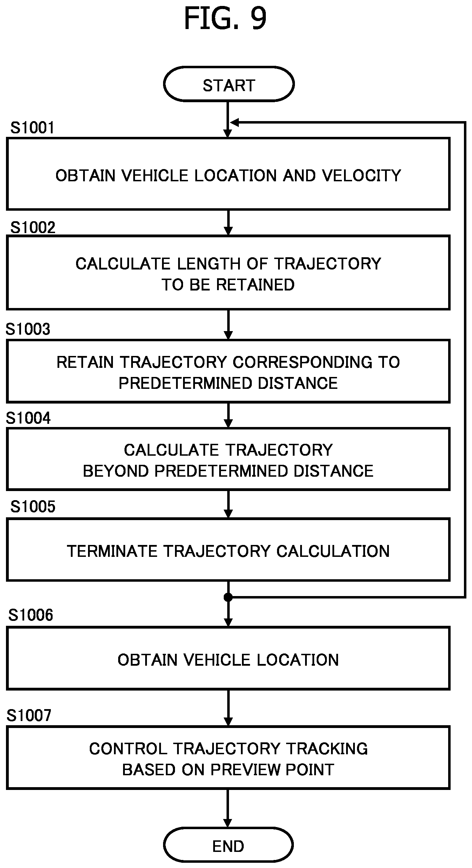

FIG. 9 is a flowchart illustrating a control process of microcomputer 610 (trajectory design unit 620 and trajectory tracking control unit 630) which is performed when the shape of trajectory is partly retained.

In step S1001, microcomputer 610 obtains information on the location and velocity of vehicle 100, etc.

Next, in step S1002, microcomputer 610 predicts a total distance of the distance to be traveled by vehicle 100 during the target trajectory calculation cycle $\Delta$T and the preview point distance that indicates the distance to be traveled by vehicle 100 during the preview time Tfwd, and sets the predicted total distance as length L [m] for which the trajectory is to be retained (see FIG. 6).

Here, microcomputer 610 calculates the length L [m] for which the trajectory is to be retained by equation (1) based on the time T obtained by adding the calculation cycle $\Delta$T and the preview time Tfwd, and the velocity of vehicle 100 [m/s] (hereinafter, referred to as vehicle velocity):

$$L = (\Delta T + Tfwd) \times \text{vehicle velocity} = T \times \text{vehicle velocity} \ldots (1)$$

In addition, taking into account the change in the velocity due to an acceleration of vehicle 100, microcomputer 610 may calculate the length L for which the trajectory is to be retained by equation (2):

$$L = T \times \text{vehicle velocity} + 1/2 \times \text{acceleration} \times T^2 \quad \ldots (2)$$

Furthermore, microcomputer 610 may calculate the length L for which the trajectory is to be retained by equation (3) based on the calculation cycle $\Delta$T, the vehicle velocity, and the preview point distance D:

$$L = \Delta T \times \text{vehicle velocity} + \text{preview point distance D} \ldots (3)$$

In addition, microcomputer 610 may calculate the length L for which the trajectory is to be retained by equation (4) based on the calculation cycle $\Delta$T, the vehicle velocity, the preview point distance D, and the acceleration:

$$L = \Delta T \times \text{vehicle velocity} + 1/2 \times \text{acceleration} \times \Delta T^2 + \text{preview point distance D} \ldots (4)$$

Furthermore, when vehicle 100 is traveling in a low speed running state in which the velocity of vehicle 100 is below a predetermined value, microcomputer 610 can fix the length L at a predetermined constant distance, instead of variably setting the length L depending on the vehicle velocity.

After having calculated the length L for which the trajectory is to be retained, microcomputer 610 makes a setting, in step S1003, so as to retain the trajectory of the one preceding calculation cycle by the length L from the location of vehicle 100, in other words, so as not to change the shape of the trajectory for the length L from the location of vehicle 100.

Microcomputer 610 then calculates in the next step S1004 the subsequent target trajectory after the distance corresponding to the length L.

Next, in step S1005, microcomputer 610 designs a target trajectory consisting of a part of the trajectory of the one preceding calculation cycle corresponding to the length **L,** and the newly calculated subsequent trajectory, and terminates the calculation of target trajectory.

Each process in the above steps S1001-S1005 is performed in trajectory design unit 620.

Microcomputer 610 performs processing as trajectory tracking control unit 630 in steps S1006-S1007.

In step S1006, microcomputer 610 obtains location information of vehicle 100.

Next, in step S1007, microcomputer 610 outputs a control command to actuator unit 700 based on the trajectory deviation amount at the preview point.

The control process represented in the flowchart in FIG. 9 basically premises that a target trajectory is calculated for each calculation cycle $\Delta T$ while one application software (in other words, one driver assistance function) is continuously executed.

However, such a situation in which microcomputer 610 partly retains the shape of the trajectory is not limited to a case in which one application software is continuously executed.

In a case in which one of multiple application software for controlling vehicle motion based on various indices (in other words, multiple driver assistance functions) is selectively switched depending on the traveling condition of vehicle 100, microcomputer 610 can partly retain the trajectory by the length corresponding to the predetermined distance from vehicle 100, before and after switching the application software.

The driver assistance functions that are switched and executed include, for example, the above described lane keeping function, preceding vehicle tracking function, and automated driving function.

In other words, when switching the control, depending on the traveling condition of vehicle 100, from a first control for controlling the motion state of vehicle 100, to a second control for controlling the motion state of vehicle 100 based on an index different from that for the first control, microcomputer 610 can calculate the second target trajectory by the second control while retaining the trajectory.

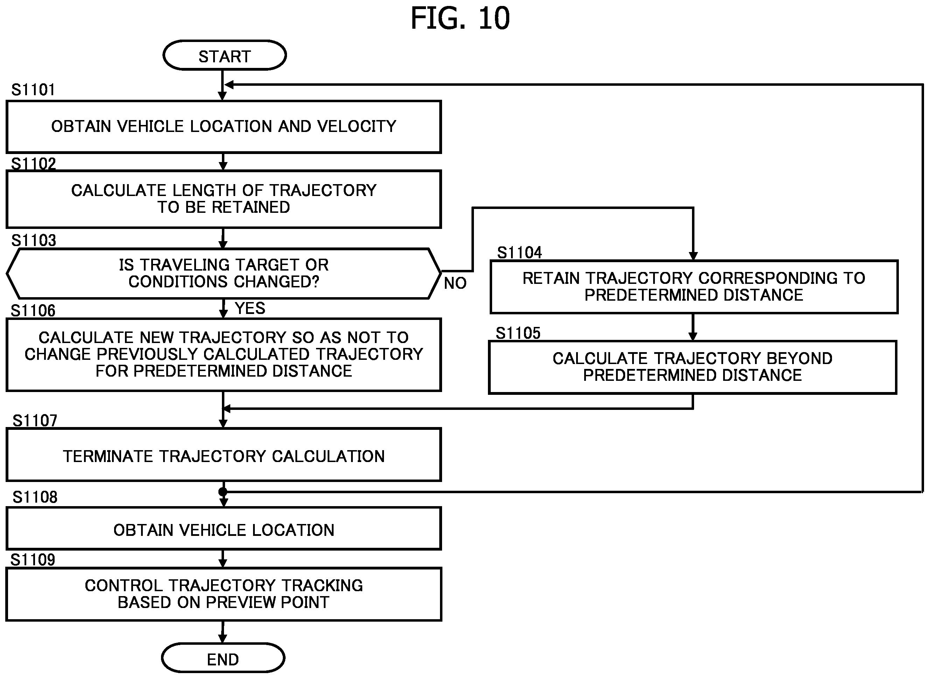

FIG. 10 is a flowchart illustrating a control process which is performed when the trajectory is retained by the length corresponding to the predetermined distance from vehicle 100 before and after switching application software (in other words, driver assistance functions).

Microcomputer 610 obtains location and velocity information of vehicle 100 in step S1101.

Next, in step S1102, microcomputer 610 predicts a total distance of the distance to be traveled by vehicle 100 during the target trajectory calculation cycle $\Delta T$ and the distance to be traveled by vehicle 100 during the preview time Tfwd.

In step S1103, microcomputer 610 determines whether switching of traveling target or conditions, which are represented for example by switching of application software, has occurred.

Specifically, in step S1103, microcomputer 610 determines whether any change, such as a change in the manner of generating target trajectory, a change in the index for generating target trajectory, and a change in the surrounding environment has occurred, resulting in a need to reroute the target trajectory.

Here, the change in the manner of generating target trajectory includes, for example, a case in which the control is switched from the lane keeping control (first control) to the preceding vehicle tracking control (second control).

The change in the index for generating target trajectory includes, for example, a case in which the target trajectory to be generated is changed from a ride-comfort-emphasizing target trajectory to a target trajectory for keeping in the vicinity of the center of the driving lane.

A change in the surrounding environment is a change due to which rerouting of target trajectory is required, and includes, for example, a case in which the friction coefficient of a road surface has changed, and a case in which any obstacles, preceding vehicles, or pedestrians are newly detected.

When it is determined in step S1103 by microcomputer 610 that switching of traveling target or conditions represented for example by switching of application software has not occurred, i.e., when, for example, one application software is continuously executed, the process proceeds from step S1103 to step S1104.

Microcomputer 610 makes a setting, in step S1104, similarly as in the above described step S1003, so as to retain the target trajectory calculated in the one preceding calculation cycle by the length L from the location of vehicle 100.

Microcomputer 610 then calculates in the next step S1105 the subsequent target trajectory after the distance corresponding to the length L.

On the other hand, when it is determined in step S1103 by microcomputer 610 that switching of traveling target or conditions, which are represented for example by switching of application software, has occurred, the process proceeds from step S1103 to step S1106.

In step S1106, microcomputer 610 calculates a target trajectory based on a new traveling target or new conditions (for example, by application software after switching) such that the trajectory for the length L from the location of vehicle 100 does not change from the trajectory before switching.

Having calculated the target trajectory in step S1105 or step S1106, microcomputer 610 terminates calculation of target trajectory in the next step S1107.

Each process in steps S1101-S1107 is performed in trajectory design unit 620.

Microcomputer 610 performs processing as trajectory tracking control unit 630 in steps S1108-S1109.

In step S1108, microcomputer 610 obtains location information of vehicle 100, and in step S1109, microcomputer 610 performs a trajectory tracking control that outputs a control command to actuator unit 700 based on the trajectory deviation amount at the preview point after the preview time Tfwd (in other words, at a preview point distance D ahead).

According to this control process, even when the traveling target or conditions is switched, resulting in a need to reroute the target trajectory, an abrupt displacement of the preview point, which is the target position on the target trajectory, resulting from re-routing of target trajectory is prevented, thereby preventing occurrence of an unexpected vehicle behavior due to such abrupt displacement of the preview point.

Microcomputer 610 may require that preview points (target positions) before and after switching be within a predetermined range, i.e., that the preview points before and after switching coincide with, or are close to, each other, as the condition for performing switching of application software.

When this switching condition is applied, microcomputer 610 calculates a target trajectory with each of the two application software prior to switching of application software. When it is determined that the preview points before and after switching coincide with, or are close to, each other, microcomputer 610 performs switching of application software (in other words, switching of target trajectories to be used in trajectory tracking control).

As a result, abrupt displacement of the preview point (target position) caused by switching of application software is prevented, thereby preventing occurrence of unexpected vehicle behavior due to such abrupt displacement of the preview point.

After the switching of application software, microcomputer 610 retains the target trajectory calculated in the one preceding calculation cycle by the length L from the location of vehicle 100 to prevent abrupt displacement of the preview point (target position).

In addition, when vehicle 100 requires emergency avoidance, microcomputer 610 can cancel the processing of retaining the trajectory calculated in the one preceding calculation cycle by the length L from the location of vehicle 100 to a newly designed target trajectory starting from the location of vehicle 100.

If the processing of retaining the trajectory is canceled by microcomputer 610 when emergency avoidance is required, the deterioration of the performance of emergency avoidance can be prevented.

Here, emergency avoidance refers to a situation in which switching to a driver assistance for emergency avoidance occurs, for example, in a case in which obstacles, such as objects or pedestrians, enter in the traveling path of vehicle 100, which are required to be avoided.

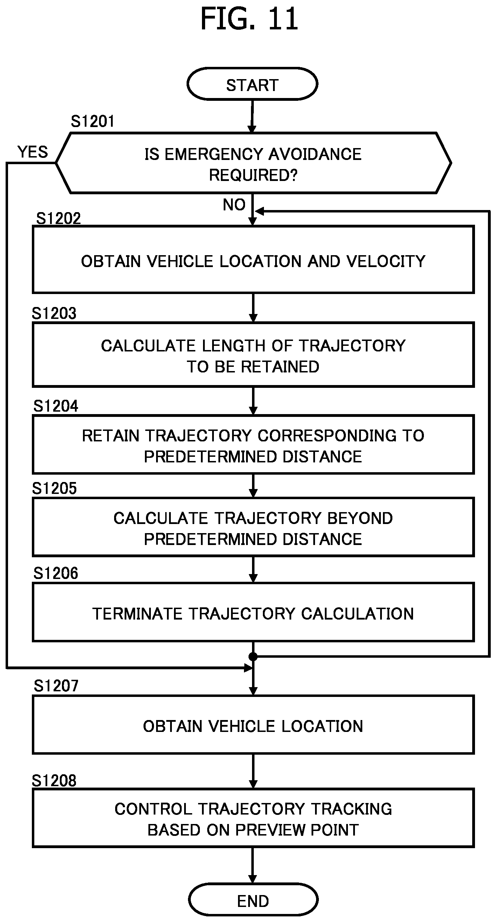

FIG. 11 is a flowchart illustrating a control process which is performed when an emergency avoidance is required and trajectory retention is canceled.

In step S1201, microcomputer 610 determines whether an emergency avoidance is required based, for example, on an emergency avoidance determination flag which can be a trigger for performing the driver assistance for emergency avoidance.

Microcomputer 610 then cancels trajectory retention by bypassing the processes which are performed in steps S1202 to S1206 for designing a trajectory with the shape of trajectory being retained.

That is, when emergency avoidance is required, microcomputer 610 prioritizes emergency avoidance such as avoiding obstacles over prevention of abrupt displacement of preview point (target point), thereby newly designing a target trajectory for emergency avoidance without being restricted by the prior history of the target trajectory.

On the other hand, when it is determined in step S1201 that emergency avoidance is not required, microcomputer 610 performs processes of steps S1202 to S1206 to design a target trajectory while retaining the target trajectory calculated in the one preceding calculation cycle by the length corresponding to the predetermined distance from vehicle 100.

The processes of steps S1202 to S1206 are similar to the above-described processes of steps S1001 to S1005, and thus, the description thereof will not be presented.

In step S1207, microcomputer 610 obtains location information of vehicle 100, and in step S1208, microcomputer 610 performs a trajectory tracking control that outputs a control command to actuator unit 700 based on the trajectory deviation amount at the preview point after the preview time Tfwd (in other words, at a preview point distance D ahead).

According to this control process, when emergency avoidance is not required, abrupt displacement of the preview point (target position) is prevented, thereby preventing occurrence of unexpected vehicle behavior, whereas when emergency avoidance is required, emergency avoidance performance can be maximized.

The trajectory tracking control by microcomputer 610 is not limited to a control that sets a preview point as a target position.

For example, microcomputer 610 can perform a control, as disclosed in Japanese Patent No. 6837196, to accumulate the trajectory point on the target trajectory to cause vehicle 100 to track the closest point (the closest target position), which is the point closest to vehicle 100 on a line connecting each of the accumulated trajectory points.

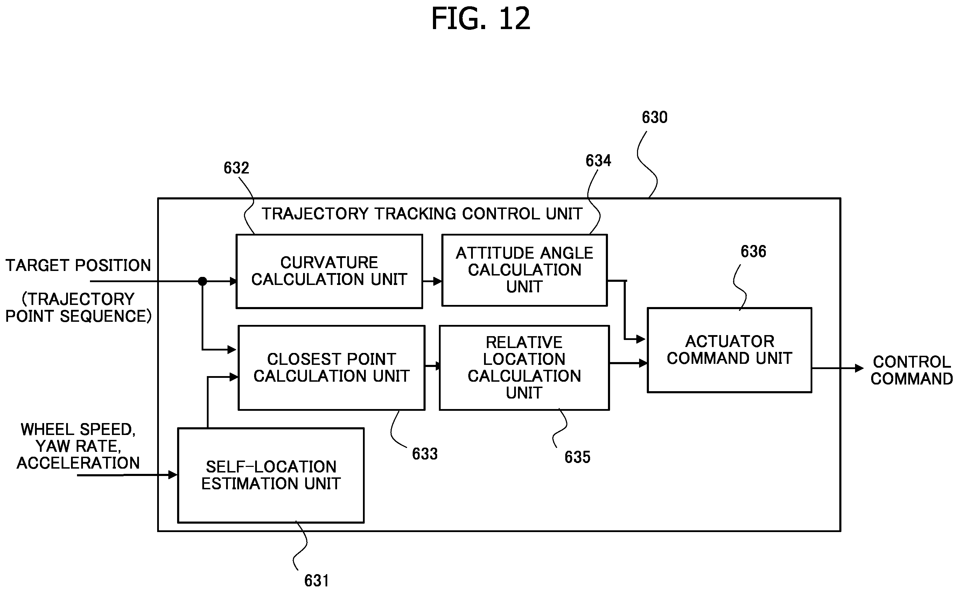

FIG. 12 is a functional block diagram illustrating a control performed by trajectory tracking control unit 630 for causing vehicle 100 to track the above described closest point.

Trajectory tracking control unit 630 illustrated in FIG. 12 acquires, from trajectory design unit 620, information of a trajectory point sequence having a length longer than the predetermined distance according to the preview point distance, as information related to target position.

Trajectory tracking control unit 630 includes a self-location estimation unit 631, a curvature calculation unit 632, a closest point calculation unit 633, an attitude angle calculation unit 634, a relative location calculation unit 635, and an actuator command unit 636.

Self-location estimation unit 631 estimates the location of vehicle 100 by measuring the longitude and latitude of the location of vehicle 100 by GPS reception unit 310 or by performing dead reckoning.

Curvature calculation unit 632 calculates the curvature of the line connecting each of the trajectory points obtained from trajectory designing unit 620 and also calculates change of the curvature.

Closest point calculation unit 633 calculates the closest point (in other words, a closest target position), which is the point closest to the location of vehicle 100 on the line connecting each of the trajectory points.

Attitude angle calculation unit 634 calculates the attitude angle of vehicle 100 necessary for matching the traveling direction of vehicle 100 at the closest point calculated by closest point calculation unit 633 with the yaw angle at the closest point, that is, the direction of tangent of the target path, based on the curvature of the target trajectory and change of the curvature calculated by curvature calculation unit 632.

The attitude angle is the angle made by the traveling direction of vehicle 100 and the longitudinal axis direction of vehicle 100.

Relative location calculation unit 635 calculates the relative location of the closest point, i.e., trajectory deviation amount, calculated by closest point calculation unit 633 relative to the location of vehicle 100 estimated by self-location estimation unit 631.

Next, actuator command unit 636 corrects the yaw angle at the closest point based on the attitude angle calculated by attitude angle calculation unit 634, generates a steering command and an acceleration or deceleration command for causing vehicle 100 to pass through the closest point at the target vehicle velocity and the corrected yaw angle, and outputs the generated commands to actuator unit 700.

The steering command output by actuator command unit 636 includes, for example, a yaw rate command, a lateral location command, a yaw angle command, etc.

Here, trajectory design unit 620 may change a target trajectory due to change in driving lane, etc.

In such a case, if trajectory design unit 620 is not configured to perform processing of retaining trajectory for a predetermined distance, trajectory design unit 620 discards the information about the trajectory point sequence (in other words, target point) before the change and outputs, to trajectory tracking control unit 630, information about a trajectory point sequence to a trajectory point that is away by the preview point distance, in order from the trajectory point close to the position of the vehicle among the trajectory points after the change.

In this case, similarly to the case in which vehicle 100 is caused to track the preview point, the trajectory point sequence may be abruptly displaced, resulting in occurrence of unexpected vehicle behavior.

In contrast, trajectory design unit 620, which is configured to perform processing of retaining trajectory for a predetermined distance, calculates a trajectory point sequence (second target position) of the current calculation cycle, while retaining a trajectory including a trajectory corresponding to the distance traveled by vehicle 100 during the target trajectory calculation cycle and the trajectory point sequence (first target position) of the previous calculation cycle.

In this case, abrupt change in the trajectory point sequence can be prevented, thereby preventing occurrence of an unexpected vehicle behavior while securing the trajectory tracking performance.

Vehicle control system 200 illustrated in FIG. 1 is configured to include automated driving control unit 500 and vehicle motion control unit 600, which are upper units, as separate units. However, the present invention is not limited to this configuration.

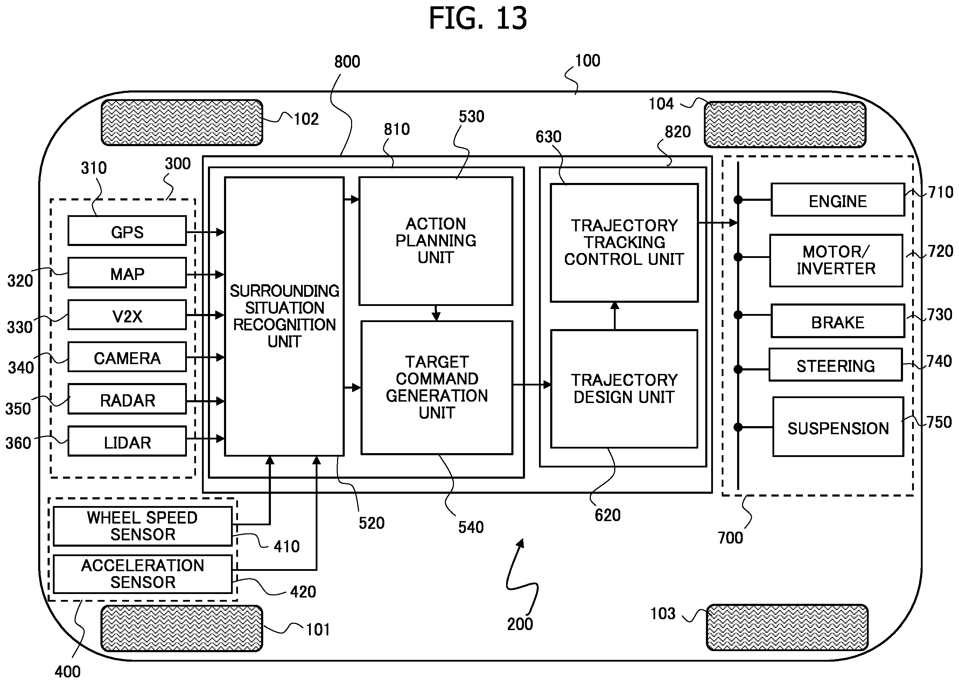

FIG. 13 illustrates a vehicle control system in which one integrated control unit (in other words, one unit) 800 is provided with a microcomputer 810 that generates a target command and a microcomputer 820 that performs trajectory tracking control.

That is, integrated control unit 800 is provided with microcomputer 810 including functional units of surrounding situation recognition unit 520, action planning unit 530, and target command generation unit 540, and microcomputer 820 including functional units of trajectory design unit 620 and trajectory tracking control unit 630.

Microcomputer 810 and microcomputer 820 are connected by circuit or wire to exchange signals, and to achieve similar operation and function as the vehicle control system of FIG. 1.

In addition, vehicle control system 200 is not limited to a system that is individually provided with a first microcomputer including functional units of surrounding situation recognition unit 520, action planning unit 530, and target command generation unit 540, and a second microcomputer including functional units of trajectory design unit 620 and trajectory tracking control unit 630.

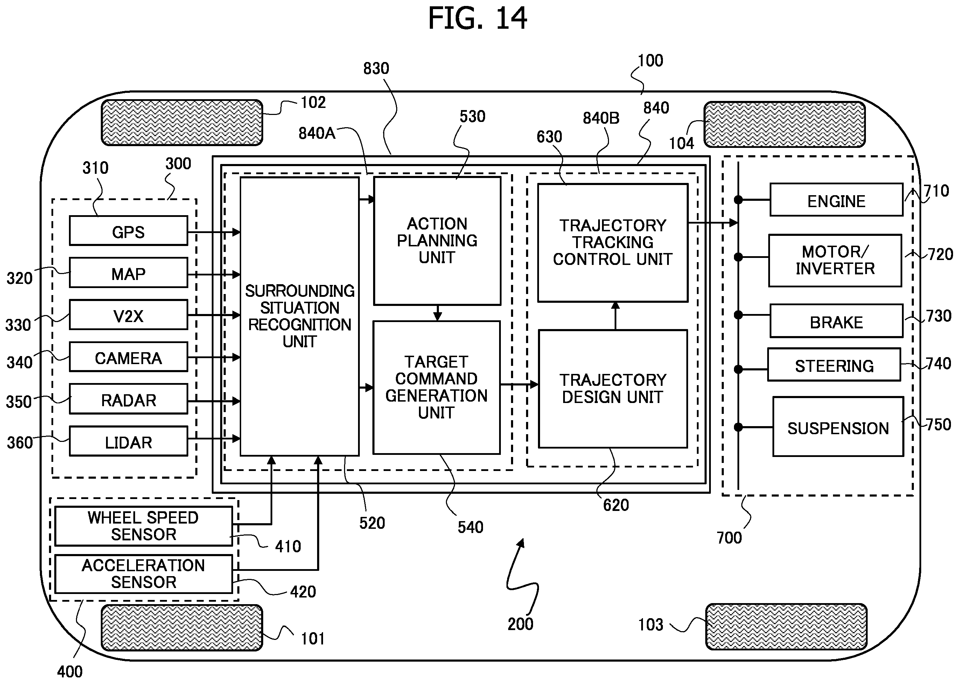

FIG. 14 illustrates a vehicle control system in which one integrated control unit 830 is provided with one microcomputer 840, and microcomputer 840 includes, as an upper unit logic 840 A, functional units of surrounding situation recognition unit 520, action planning unit 530, and target command generation unit 540, and microcomputer 840 further includes, as a vehicle motion control logic 840B, functional units of trajectory design unit 620 and trajectory tracking control unit 630.

When dividing functional units of a surrounding situation recognition unit, an action planning unit, a target command generation unit, a trajectory design unit, and a trajectory tracking control unit among multiple microcomputers, the dividing pattern is not limited to the pattern shown in FIGs. 1 and 13.

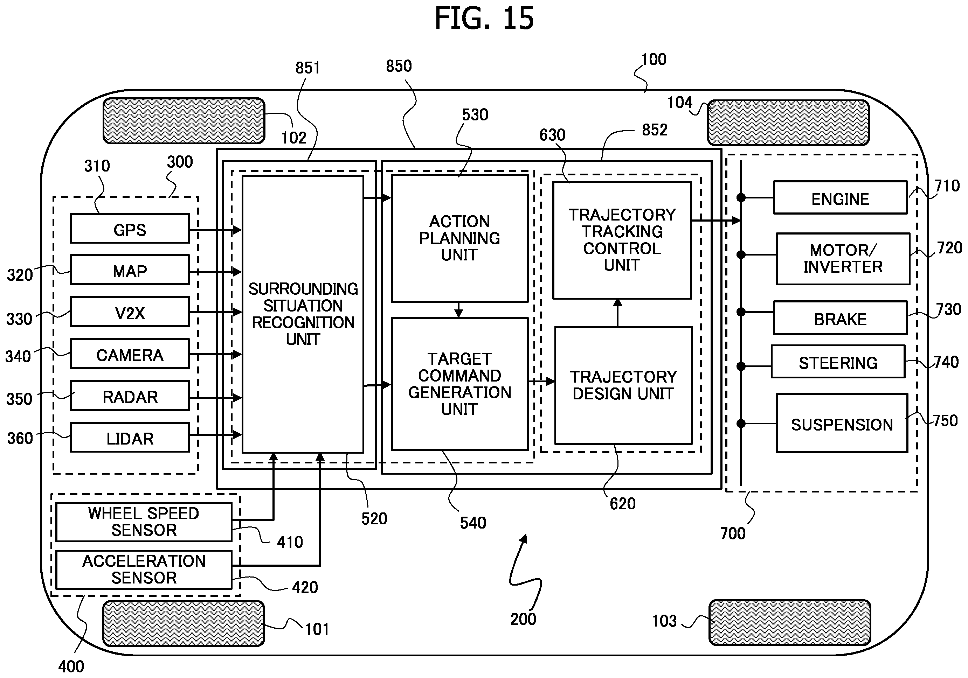

For example, FIG. 15 illustrates a vehicle control system in which one integrated control unit 850 is provided with a first microcomputer 851 and a second microcomputer 852, and the first microcomputer 851 includes surrounding situation recognition unit 520 as a functional unit and the second microcomputer 852 includes functional units of action planning unit 530, target command generation unit 540, trajectory design unit 620, and trajectory tracking control unit 630.

The individual technical concepts described in the above examples can be appropriately combined and used as long as there is no conflict.

In addition, although the present invention has thus been described in detail with reference to preferable examples, it is apparent to those skilled in the art that various types of modifications are possible, based on the basic technical concepts and teachings of the present invention.

For example, when recognizing a curve in front of vehicle 100 while vehicle 100 is traveling on a straight road, trajectory design unit 620 can switch the mode from a mode in which a target trajectory is newly calculated from the location of vehicle 100 for every calculation cycle, to a mode in which a target trajectory is retained by a length corresponding to a predetermined distance.

Abrupt change in target position such as preview point is likely to occur when vehicle 100 enters a curve from a straight road. Accordingly, when the abrupt change in target position is predicted, trajectory design unit 620 can perform processing of retaining a target trajectory by a length corresponding to a predetermined distance.

In addition, when a friction coefficient of a road surface is below a predetermined value, an unexpected vehicle behavior is likely to occur due to abrupt change in target position. In such a situation, trajectory design unit 620 can perform processing of retaining a target trajectory by a length corresponding to a predetermined distance.

These and further aspects (i) of the present invention and (ii) of its technical background may be obtained based on the following items (1) to (14):

Item (1): A vehicle control device,

- comprising a control unit that outputs a calculation result based on input information,

- wherein the control unit:

  - calculates, while retaining a trajectory including a part of a first target trajectory calculated at a first time for calculating a target trajectory along which a vehicle is to travel, a second target trajectory at a second time which is a next calculation timing of a target trajectory after a calculation cycle from the first time, wherein the retained part of the first target trajectory includes a section corresponding to a distance to be traveled by the vehicle during a time from the first time to the second time and a first target position set on the first target trajectory, and

  - outputs a control command for driving the vehicle based on information related to a second target position set on the second target trajectory.

Item (2): The vehicle control device according to item (1), wherein the control unit calculates the trajectory to be retained based on a time obtained by adding a calculation cycle and a preview time of a first preview point that is the first target position, and a velocity of the vehicle.

Item (3): The vehicle control device according to claim 1, wherein the control unit calculates the trajectory to be retained by adding:

- a value calculated based on a time obtained by adding a calculation cycle and a preview time of a first preview point that is the first target position, and a velocity of the vehicle, and

- a value calculated based on an acceleration of the vehicle and the preview time of the first preview point that is the first target position.

Item (4): The vehicle control device according to item (1), wherein the control unit calculates the trajectory to be retained by adding:

- a value calculated based on a calculation cycle and a velocity of the vehicle, and
- a preview point distance of a first preview point that is the first target position.

Item (5): The vehicle control device according to item (1), wherein the control unit calculates the trajectory to be retained by adding:

- a value calculated based on a calculation cycle and a velocity of the vehicle,

- a value calculated based on an acceleration of the vehicle and a calculation cycle, and

- a preview point distance of a first preview point that is the first target position.

Item (6): The vehicle control device according to claim item (1), wherein when a velocity of the vehicle is less than a predetermined value, the control unit retains the trajectory by a predetermined distance.

Item (7): The vehicle control device according to item (1), wherein when the vehicle requires an emergency avoidance, the control unit calculates the second target trajectory without retaining the trajectory.

Item (8): The vehicle control device according to item (1), wherein when switching a control, depending on a traveling condition of the vehicle, from a first control for controlling motion state of the vehicle, to a second control for controlling motion state of the vehicle based on an index different from that for the first control, the control unit calculates the second target trajectory based on the second control while retaining the trajectory.

Item (9): The vehicle control device according to item (8), wherein when the first target position in the first control and the first target position in the second control are within a predetermined range, the control unit switches from the first control to the second control.

Item (10): A vehicle control device,

- comprising a control unit that outputs a calculation result based on input information,

- wherein the control unit:

  - calculates, while retaining a trajectory including a part of a first target trajectory calculated at a first time for calculating a target trajectory along which a vehicle is to travel, a second target trajectory at a second time which is a next calculation timing of a target trajectory after a calculation cycle from the first time, wherein the retained part of the first target trajectory corresponds to a predetermined distance from the vehicle, and

  - outputs a control command for driving the vehicle based on information related to a target position set on the second target trajectory.

Item (11): A vehicle control method,

- performed by a control unit provided in a vehicle,

- wherein the control unit:

  - calculates, while retaining a trajectory including a part of a first target trajectory calculated at a first time for calculating a target trajectory along which a vehicle is to travel, a second target trajectory at a second time which is a next calculation timing of a target trajectory after a calculation cycle from the first time, wherein the retained part of the first target trajectory includes a section corresponding to a distance to be traveled by the vehicle during a time from the first time to the second time and a first target position set on the first target trajectory, and

- outputs a control command for driving the vehicle based on information related to a second target position set on the second target trajectory.

Item (12): A vehicle control system, comprising:

- an environment recognition unit that acquires information related to a driving environment of a driving road on which a vehicle travels;

- a vehicle motion state acquisition unit that acquires information related to a motion state of the vehicle;

- a control unit that outputs a calculation result based on input information, the control unit:

  - calculating, while retaining a trajectory including a part of a first target trajectory calculated at a first time for calculating a target trajectory along which a vehicle is to travel, a second target trajectory at a second time which is a next calculation timing of a target trajectory after a calculation cycle from the first time, wherein the retained part of the first target trajectory includes a section corresponding to a distance to be traveled by the vehicle during a time from the first time to the second time and a first target position set on the first target trajectory, and

  - outputting a control command for driving the vehicle based on information related to a second target position set on the second target trajectory; and

an actuator unit that controls the motion state of the vehicle based on the control command.

Item (13): A vehicle control system 200, comprising:

- an environment recognition unit 300 that is configured to acquire information related to a driving environment of a driving road on which a vehicle 100 travels;

- a vehicle motion state acquisition unit 400 that is configured to acquire information related to a motion state of the vehicle 100;

- a control unit 500, 600, 630, 800, 830, 850 that is configured to output a calculation result based on input information,

wherein:

- the control unit 500, 600, 630, 800, 830, 850 is configured:

- to calculate, while holding, for a predetermined distance from the vehicle 100, a shape of a first target trajectory calculated at a first time t0 for calculating a target trajectory along which the vehicle 100 is to travel, a second target trajectory at a second time t0+$\Box$T which is a next calculation timing of a target trajectory,

- to set a total distance of a distance to be traveled by the vehicle 100 during a time $\Box$T from the first time t0 to the second time t0+$\Box$T and a preview point distance D that indicates a distance to be traveled by the vehicle 100 during a preview time Tfwd as the predetermined distance, and

- to output a control command for driving the vehicle 100 based on information related to a second target position set on the second target trajectory; and

- an actuator unit 700 is provided that is configured to control the motion state of the vehicle 100 based on the control command.

Item (14): The vehicle control system 200 according to claim 1, wherein when the control unit 500, 600, 630, 800, 830, 850 is configured such that, when the control unit 500, 600, 630, 800, 830, 850 determines to change the target trajectory due to a change in the driving environment, the control unit 500, 600, 630, 800, 830, 850 calculates, while holding the shape of the first target trajectory for the predetermined distance, the second target trajectory at the second time t0+ΔT which is the next calculation timing of the target trajectory.

REFERENCE SYMBOL LIST

100 ... vehicle, 200 ... vehicle control system, 300 ... external environment recognition unit, 400 ... vehicle motion state acquisition unit, 500 ... automated driving control unit, 510 ... microcomputer, 520 ... surrounding situation recognition unit, 530 ... action planning unit, 540 ... target command generation unit, 600 ... vehicle motion control unit, 610 ... microcomputer (controller, control unit), 620 ... trajectory design unit, 630 ... trajectory tracking control unit ,700 ... actuator unit

**Claims**

1.  A vehicle control system (200),
    comprising:

    - an environment recognition unit (300) that is configured to acquire information related to a driving environment of a driving road on which a vehicle (100) travels;
    - a vehicle motion state acquisition unit (400) that is configured to acquire information related to a motion state of the vehicle (100);
    - a control unit (500, 600, 630, 800, 830, 850) that is configured to output a calculation result based on input information,

    wherein:

    - the control unit (500, 600, 630, 800, 830, 850) is configured:

        - to calculate, while holding, for a predetermined distance from the vehicle (100), a shape of a first target trajectory calculated at a first time (t0) for calculating a target trajectory along which the vehicle (100) is to travel, a second target trajectory at a second time (t0+ΔT) which is a next calculation timing of a target trajectory,
        - to set a total distance of a distance to be traveled by the vehicle (100) during a time (ΔT) from the first time (t0) to the second time (t0+ΔT) and a preview point distance (D) that indicates a distance to be traveled by the vehicle (100) during a preview time (Tfwd) as the predetermined distance, and
        - to output a control command for driving the vehicle (100) based on information related to a second target position set on the second target trajectory; and

    - an actuator unit (700) is provided that is configured to control the motion state of the vehicle (100) based on the control command.

2.  The vehicle control system (200) according to claim 1, wherein when the control unit (500, 600, 630, 800, 830, 850) is configured such that, when the control unit (500, 600, 630, 800, 830, 850) determines to change the target trajectory due to a change in the driving environment, the control unit (500, 600, 630, 800, 830, 850) calculates, while holding the shape of the first target trajectory for the predetermined distance, the second target trajectory at the second time (t0+ΔT) which is the next calculation timing of the target trajectory.

## FIG. 1

# FIG. 2

《LANE KEEPING BY CAMERA》

LANE MARKER

LANE MARKER

CENTER OF LANE MARKERS

# FIG. 3

《TRACKING OF TRAJECTORY TRAVELED BY PRECEDING VEHICLE》

OBSTACLE

LOCATION OF PRECEDING VEHICLE

# FIG. 4

《TRACKING OF PATH GENERATED BY
MAP AND AUTOMATED DRIVING》

POINT ON
THE PATH

# FIG. 5

PREVIEW
POINT

$e_y$

TARGET TRAJECTORY
(CENTER OF LANE MARKERS
ON BOTH SIDES, etc.)

TRAVELED
TRAJECTORY

# FIG. 6

《TRAJECTORY RETAINING PROCESSING: NO》 ⟹ 《TRAJECTORY RETAINING PROCESSING: YES》

FIRST TIME t0

SECOND TIME t0+ΔT

TARGET TRAJECTORY

PREVIEW POINT

100

SECOND TIME t0+ΔT

FIRST TIME t0

TARGET TRAJECTORY

RETAINING TRAJECTORY (LENGTH L)

PREVIEW POINT

100

# FIG. 7

TARGET TRAJECTORY TO THIS POINT IS REQUIRED TO BE CALCULATED

$t=t_0+2\Delta T$

$\Delta T$

Tfwd

TRAJECTORY TO THIS POINT IS REQUIRED TO OVERLAP THE TRAJECTORY OF ONE PRECEDING CYCLE

Tfwd

$t=t_0+\Delta T$

$\Delta T$

ROUTE TRAJECTORY WITH VEHICLE COORDINATE SYSTEM AT THE TIME OF STARTING THE TASK

$t=t_0$

# FIG. 8

TRAJECTORY
BASED ON t=t$_0$

TRAJECTORY BASED ON t=t$_0$ IS
TRANSFORMED INTO VEHICLE
COORDINATE SYSTEM OF t=t$_0$+$\Delta$T

TRAJECTORY
BASED ON t=t$_0$+$\Delta$T

t=t$_0$+$\Delta$T

t=t$_0$+$\Delta$T

COORDINATE
TRANSFORMATION

# FIG. 9

START

**S1001**
OBTAIN VEHICLE LOCATION AND VELOCITY

**S1002**
CALCULATE LENGTH OF TRAJECTORY
TO BE RETAINED

**S1003**
RETAIN TRAJECTORY CORRESPONDING TO
PREDETERMINED DISTANCE

**S1004**
CALCULATE TRAJECTORY
BEYOND PREDETERMINED DISTANCE

**S1005**
TERMINATE TRAJECTORY CALCULATION

**S1006**
OBTAIN VEHICLE LOCATION

**S1007**
CONTROL TRAJECTORY TRACKING
BASED ON PREVIEW POINT

END

# FIG. 10

```
                        ┌─────────────┐
                        │    START    │
                        └──────┬──────┘
                               │
  S1101                        ▼
  ┌──────────────────────────────────────────────────────┐
  │      OBTAIN VEHICLE LOCATION AND VELOCITY             │
  └──────────────────────────────────────────────────────┘

  S1102                        │
  ┌──────────────────────────────────────────────────────┐
  │         CALCULATE LENGTH OF TRAJECTORY               │
  │                 TO BE RETAINED                        │
  └──────────────────────────────────────────────────────┘

  S1103                        │
  ╱──────────────────────────────────────────────────────╲    NO
  ╲      IS TRAVELING TARGET OR CONDITIONS CHANGED?       ╱ ──────►
  S1106                        │ YES
  ┌──────────────────────────────────────────────────────┐
  │  CALCULATE NEW TRAJECTORY SO AS NOT TO               │
  │  CHANGE PREVIOUSLY CALCULATED TRAJECTORY            │
  │       FOR PREDETERMINED DISTANCE                      │
  └──────────────────────────────────────────────────────┘

  S1107                        │
  ┌──────────────────────────────────────────────────────┐
  │         TERMINATE TRAJECTORY CALCULATION             │
  └──────────────────────────────────────────────────────┘

  S1108                        │
  ┌──────────────────────────────────────────────────────┐
  │            OBTAIN VEHICLE LOCATION                    │
  └──────────────────────────────────────────────────────┘

  S1109                        │
  ┌──────────────────────────────────────────────────────┐
  │         CONTROL TRAJECTORY TRACKING                  │
  │            BASED ON PREVIEW POINT                     │
  └──────────────────────────────────────────────────────┘
                               │
                        ┌──────▼──────┐
                        │     END     │
                        └─────────────┘
```

S1104
RETAIN TRAJECTORY CORRESPONDING TO PREDETERMINED DISTANCE

S1105
CALCULATE TRAJECTORY BEYOND PREDETERMINED DISTANCE

EP 4 772 416 A2

# FIG. 11

START

S1201

YES / IS EMERGENCY AVOIDANCE
REQUIRED?

NO

S1202
OBTAIN VEHICLE LOCATION AND VELOCITY

S1203
CALCULATE LENGTH OF TRAJECTORY
TO BE RETAINED

S1204
RETAIN TRAJECTORY CORRESPONDING TO
PREDETERMINED DISTANCE

S1205
CALCULATE TRAJECTORY BEYOND
PREDETERMINED DISTANCE

S1206
TERMINATE TRAJECTORY CALCULATION

S1207
OBTAIN VEHICLE LOCATION

S1208
CONTROL TRAJECTORY TRACKING
BASED ON PREVIEW POINT

END

FIG. 12

# FIG. 13

EP 4 772 416 A2

# FIG. 14

EP 4 772 416 A2

# FIG. 15

EP 4 772 416 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6610799 B

- JP 6837196 B